# EUROPEAN PATENT APPLICATION

(11) **EP 3 944 177 A1**
(43) Date of publication of application: **26.01.2022**
(21) Application number: 21173416.5
(22) Date of filing: 11.05.2021
(51) Int. Cl.: G06Q 30/06

(54) **SYSTEM, SHELF DEVICE, AND CART POS**

(30) Priority: 22.07.2020 JP 2020125444
(71) Applicant: Toshiba Tec Kabushiki Kaisha, Shinagawa-ku Tokyo 141-8562 (JP)
(72) Inventor: Terahara, Koji, Shinagawa-ku, Tokyo 141-8562 (JP)
(74) Representative: Bandpay & Greuter

(57) **Abstract**

A system includes a shelf device and a cart point of sale (POS) device. The shelf device includes a first sensor configured to detect that a commodity is taken out from a shelf, a first biological sensor configured to read bioinformatics data for identifying a person, and a transmitting unit configured to correlate and transmit a commodity code and bioinformatics data of the person. The cart POS includes a storage section configured to store commodities, a second biological sensor configured to read the bioinformatics data of the person, a first storing unit configured to store, in a storing unit, the bioinformatics data of the person, a reception determining unit configured to determine reception of the commodity code and the bioinformatics data, a second sensor configured to detect that a commodity is stored in the storage section, and a registration processing unit configured to execute registration processing.

## Description

### FIELD

Embodiments described herein relate generally to a system, a shelf device, and a cart POS.

### BACKGROUND

In recent years, in a store such as a supermarket or a volume retail store, if a customer purchases commodities displayed in the store, for example, the customer receives a cart attached with a tablet terminal in the entrance of the store and, if the customer puts a commodity to be purchased in the cart, reads information concerning the commodity and registers the commodity with the tablet terminal.

### DESCRIPTION OF THE DRAWINGS

FIG. 1 is an explanatory diagram illustrating an example of a system in at least one embodiment;
FIG. 2 is an explanatory diagram illustrating an example of arrangement of shelf devices;
FIG. 3 is a perspective view illustrating an example of the configuration of a cart POS;
FIG. 4 is a block diagram illustrating a hardware configuration of the shelf device;
FIG. 5 is a block diagram illustrating a hardware configuration of the cart POS;
FIG. 6 is a functional block diagram illustrating a functional configuration of the shelf device;
FIG. 7 is a flowchart illustrating a flow of control processing of the shelf device;
FIG. 8 is a functional block diagram illustrating a functional configuration of the cart POS; and
FIG. 9 is a flowchart illustrating a flow of control processing of the cart POS.

### DETAILED DESCRIPTION

In a scheme as described above, if a customer registers a commodity, since the commodity is registered in association with personal identification information for identifying an individual (for example, customer information stored in a customer card or a credit card), a medium storing the personal identification information is necessary. A customer forgetting to carry the medium cannot use this scheme.

An object of at least one embodiment is to provide, in order to solve the problem described above, a system, a shelf device, and a cart POS capable of performing registration processing for registering a commodity in association with personal identification information even if a medium or the like for identifying an individual is absent.

A system according to at least one embodiment is a system including: a shelf device provided for each of commodities in a shelf on which the commodities are displayed; and a cart POS capable of moving and capable of storing the commodities displayed on the shelf. The shelf device includes: a first sensor configured to detect that the commodity is taken out from the shelf; a first biological sensor provided corresponding to the first sensor and configured to sense bioinformatics data for identifying a person; and a transmitting unit configured to correlate and transmit a commodity code for identifying the commodity if the first sensor detects that the commodity is taken out and the bioinformatics data of the person is read by the first biological sensor. The cart POS includes: a storage section configured to store commodities; a second biological sensor configured to read the bioinformatics data of the person; a first memory configured to store, in a memory, the bioinformatics data of the person read by the second biological sensor; a controller configured to determine reception of the commodity code and the bioinformatics data transmitted from the shelf device; and a second sensor configured to detect that a commodity is stored in the storage section. The controller is configured to, when the second sensor detects that the commodity is stored, execute registration processing based on the commodity code, the reception of which is determined, on condition that the bioinformatics data, the reception of which is determined by the controller, and the bioinformatics data stored in the memory coincide.

Preferably, the controller is configured to determine whether the bioinformatics data, the reception of which is determined, and the bioinformatics data stored in the memory coincide. The controller further includes a second memory configured to store the received commodity code in response to a determination that the bioinformatics data, the reception of which is determined, and the bioinformatics data stored in the memory coincide. The controller is further configured to: when the second sensor detects that the commodity is stored, determine whether the commodity code is stored by the second memory; and in response to a determination that the commodity code is stored, execute the registration processing based on the stored commodity code.

Preferably, the first biological sensor and the second biological sensor include fingerprint sensors configured to read a fingerprint of a person.

Preferably, the shelf device includes a plurality of shelf plates in a height direction, a pupil sensor configured to read the bioinformatics data from a pupil of a person, the pupil sensor being provided on the shelf plate on an upper side as the first biological sensor, and a fingerprint sensor configured to read a fingerprint of a person, the fingerprint sensor being provided on the shelf plate on a lower side as the first biological sensor.

Preferably, the second sensor includes one of a weight sensor and a contact sensor.

Preferably, the cart POS includes a tablet.

There is also provided a shelf device to be used in the above-described system.

There is also provided a cart point of sale (POS) to be used in the above-described system.

At least one embodiment is explained in detail below with reference to the drawings.

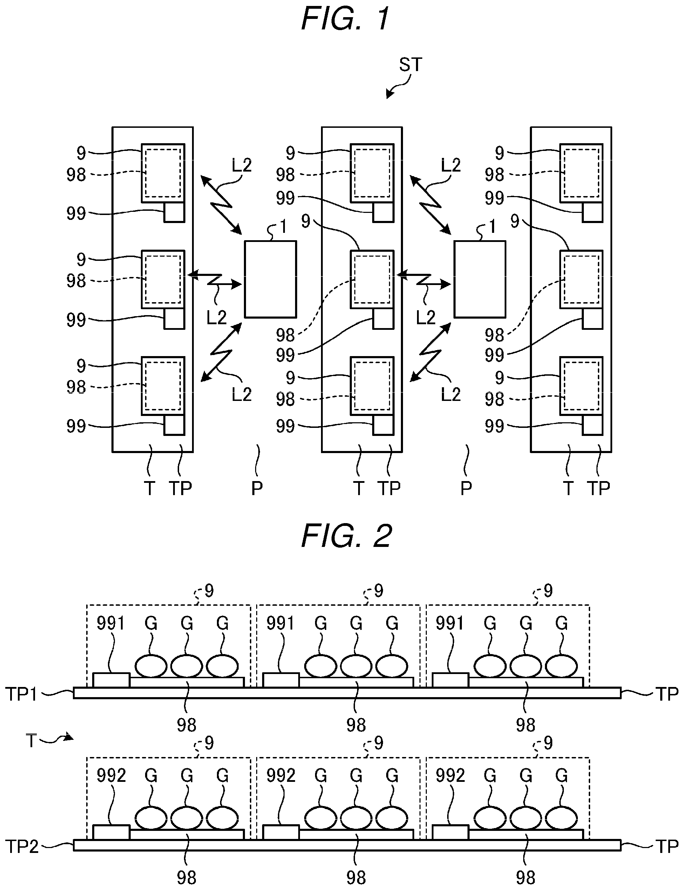

FIG. 1 is an explanatory diagram illustrating shelf devices 9 and cart POSs 1 in at least one embodiment. Fig. 2 is an explanatory diagram in which shelves T are viewed from a lateral direction. The shelf devices 9 and the cart POSs 1 configure a system ST in at least one embodiment.

As illustrated in FIG. 1, a plurality of shelves T for displaying commodities G are set in a store. In at least one embodiment illustrated in FIG. 1, for example, the shelves T in three rows are set. As illustrated in FIG. 2, each of the shelves T includes one or a plurality of shelf plates TP for displaying the commodities G. In at least one embodiment, the shelf T includes two shelf plates TP, that is, a shelf plate TP1 located in an upper stage and a shelf plate TP2 located in a lower stage.

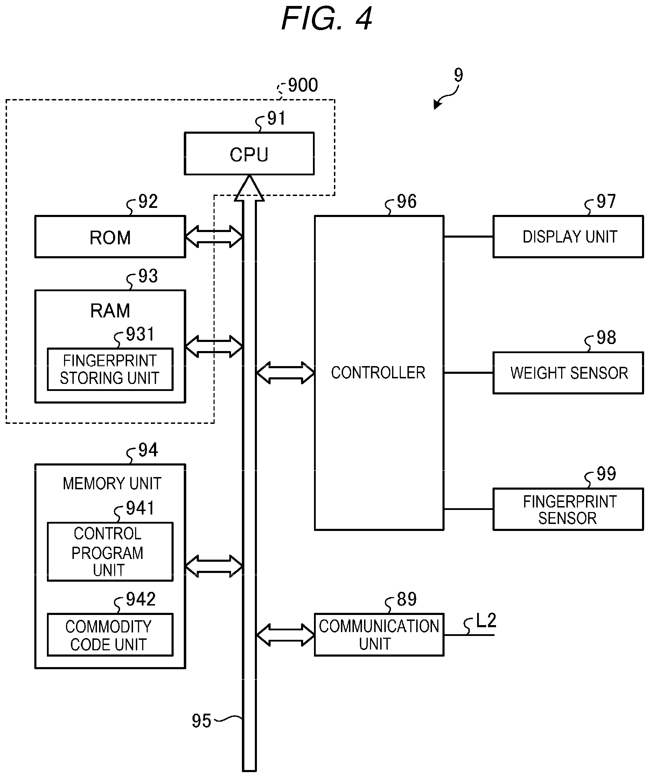

A plurality of shelf devices 9 are provided side by side in the shelf plates TP. As illustrated in detail in FIG. 4, each of the shelf devices 9 includes a weight sensor 98 (a first sensor), a fingerprint sensor 99 (a first biological sensor), and a control unit 900. In at least one embodiment, as illustrated in FIG. 2, six shelf devices 9 are provided in one shelf T (three shelf devices 9 in the shelf plate TP1 and three shelf devices 9 in the shelf plate TP2). One or a plurality of commodities to be purchased by a customer are placed on the weight sensor 98. If the commodities are placed on the weight sensor 98, the commodities are placed on the shelf T. In at least one embodiment, only the same commodities are placed on one shelf device 9. A plurality of kinds of commodities G are not placed on one shelf device 9. In at least one embodiment, since the six shelf devices 9 are provided in one shelf T, six kinds of commodities G are displayed at most.

The weight sensor 98 includes a stand (not illustrated) on which the commodities G are placed and detects a change in the weight of the commodities G placed on the stand. The weight sensor 98 includes a function of detecting a change in a total weight of the commodities G between when the commodity G is taken out from the stand and when the commodity G is placed on the stand. Specifically, the weight sensor 98 measures the weight of the commodity G placed on the stand (if a plurality of commodities G are placed on the stand, a total weight of the commodities G) and outputs a measurement value. If the commodity G is taken out from the stand, the weight sensor 98 outputs a different measurement value (reduced by the weight of the taken-out commodity G). Consequently, the weight sensor 98 detects a weight change. Besides detecting the change in the weight, the weight sensor 98 may include a function of measuring a changed weight value (the weight of the taken-out commodity G).

The fingerprint sensor 99 reads a fingerprint of a human finger using a known technique. The fingerprint sensor 99 reads a fingerprint of a person held over a fingerprint reading unit (not illustrated). Since a fingerprint is different depending on an individual person, fingerprint information of the fingerprint read by the fingerprint sensor 99 is personal identification information for identifying a person who holds the finger over the fingerprint reading unit.

In at least one embodiment illustrated in FIG. 2, the three shelf devices 9 provided in the shelf plate TP1 respectively include weight sensors 98 and fingerprint sensors 99. The weight sensors 98 measure total weights of the commodities G placed thereon and, if the commodities G are taken out, detect weight changes. The fingerprint sensors 99 (991) read fingerprints of persons and output fingerprint information indicating the read fingerprints. The three shelf devices 9 provided in the shelf plate TP2 respectively include weight sensors 98 and fingerprint sensors 99. The weight sensors 98 measure total weights of the commodities G placed thereon and, if the commodities G are taken out, detect weight changes. The fingerprint sensors 99 (992) read fingerprints of persons and output fingerprint information indicating the read fingerprints.

As a modification of at least one embodiment, the fingerprint sensors 99 (991) provided in the shelf plate TP1 may be changed to biological devices 991 that read, for example, human pupils. Pupil information of the read pupils is the same personal identification information as the fingerprint information. In this case, if the commodities G are taken out from the shelf plate TP1, even if an action of holding a fingerprint over a device set in a high place is not performed, the biological devices 991 can read the personal identification information (for example, bioinformatics data of a person) by reading the human pupils. In this case, the fingerprint sensors 99 (992) provided in the shelf plate TP2 read human fingerprints and output fingerprint information indicating the read fingerprints.

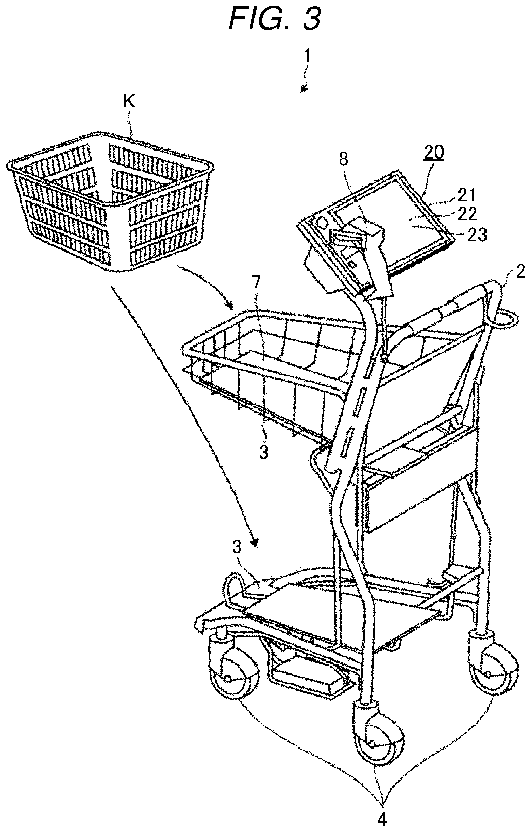

The cart POS 1 is capable of freely moving along the shelves T in passages P among the shelves T in the store. The cart POS 1 includes a basket placing section 3 (see FIG. 3) in which the commodities G are put. While pushing the cart POS 1 and walking around the store, a customer (a person) doing shopping puts the commodities G to be purchased in a basket K placed on the basket placing section 3. The cart POS 1 and the shelf devices 9 located near the cart POS 1 can communicate with each other using, for example, a wireless LAN or a short range wireless communication.

The cart POS 1 reads a fingerprint of the customer moving the cart POS 1 and stores fingerprint information indicating the fingerprint. The cart POS 1 receives a commodity code (commodity identification information) for identifying the commodity G taken out from the shelf device 9 (the shelf T) and the fingerprint information of the fingerprint read by the fingerprint sensor 99. If the received fingerprint information coincides with the fingerprint information stored by the cart POS 1, the cart POS 1 regards the received commodity code as valid and stores the received commodity code. If the commodity G taken out from the shelf T is put in the basket K on the placing section 3, the cart POS 1 executes registration processing for the commodity G based on the stored commodity code.

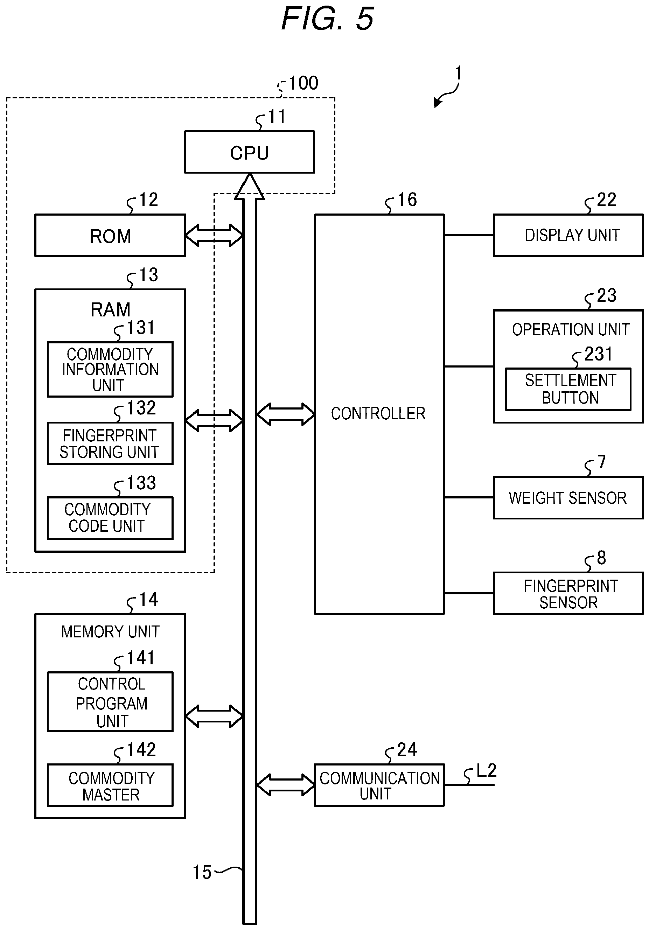

The registration processing means processing for reading out commodity information of the commodity G (a commodity name, a price of the commodity G, and the like) from a commodity master 142 (see FIG. 5) based on the stored commodity code, displaying the commodity information on a display unit 22 (see FIG. 5), and storing the commodity information in a commodity information unit 131 (see FIG. 5).

The configuration of the cart POS 1 is explained below. FIG. 3 is a perspective view illustrating an example of an exterior configuration of the cart POS 1. As illustrated in FIG. 3, the cart POS 1 is placed near the entrance of the store. A customer purchasing the commodities G receives one cart POS 1 in the entrance of the store. The customer pushes the received cart POS 1 and does shopping in the store. The customer takes out, from the shelf T, the commodity G to be purchased and stores the commodity G in the cart POS 1.

The cart POS 1 includes a handle 2, a basket placing section 3 (a storage section), casters 4, a fingerprint sensor 8 (a second biological sensor), a weight sensor 7 (a second sensor), and a tablet POS 20.

The handle 2 is a portion that the customer grips to move the cart POS 1. The basket placing section 3, which is a placing section, is a table on which the basket K storing the commodities G is placed as explained above. The commodities G taken out from the shelf T are stored in the basket K placed on the basket placing section 3 (that is, the commodities G are stored in the storage section). Four casters 4 are provided in the cart POS 1. The respective casters 4 individually rotate, whereby the cart POS 1 can be pushed by the customer to freely move in the store.

The fingerprint sensor 8 reads, using a publicly-known technique, a fingerprint of a finger of the customer moving the cart POS 1. The fingerprint sensor 99 reads a fingerprint of a person held over the fingerprint reading unit (not illustrated). The fingerprint sensor 8 may have the same configuration as the configuration of the fingerprint sensor 99.

The weight sensor 7 is provided in a bottom surface section of the basket placing section 3. The weight sensor 7 is, for example, a balance that measures the weight of an object. If the commodity G is stored in the basket K placed on the basket placing section 3, the weight sensor 7 detects a change in weight. If the commodity G is taken out from the basket K placed on the basket placing section 3, the weight sensor 7 detects a change in weight. The weight sensor 7 may have the same configuration as the configuration of the weight sensor 98.

The tablet POS 20 is detachably attached to the handle 2 or a column configuring the cart POS 1. The tablet POS 20 is a part of the cart POS 1. The tablet POS 20 executes registration processing (explained below) for the stored commodity G. The tablet POS 20 has an exterior and its functions are usable from its exterior. The tablet POS 20 has the function of a so-called tablet computer (tablet terminal) and includes a main body unit 21, a display unit 22, and an operation unit (operation panel or operation interface) 23.

The display unit 22 is a plate-like display device such as a liquid crystal display. The operation unit 23 is a touch input device (a touch panel) provided over the surface of the display unit 22. The main body unit 21 is a thin box-like housing including an opening section on one surface and stores the units described above. The opening section of the main body unit 21 exposes a region where the operation unit 23 receives operation.

A hardware configuration of the shelf device 9 is explained. FIG. 4 is a block diagram illustrating the hardware configuration of the shelf device 9. As illustrated in FIG. 4, the shelf device 9 includes a CPU (Central Processing Unit) 91, a ROM (Read Only Memory) 92, a RAM (Random Access Memory) 93, and a memory unit 94. The CPU 91 functions as a control entity. The ROM 92 stores various programs. Programs and various data are loaded in the RAM 93. The memory unit 94 stores various programs. The CPU 91, the ROM 92, the RAM 93, and the memory unit 94 are connected to one another via a bus 95. The CPU 91, the ROM 92, and the RAM 93 configure the control unit 900 (a controller). That is, the CPU 91 operates according to a control program stored in the ROM 92 or the memory unit 94 and loaded in the RAM 93, whereby the control unit 900 executes control processing for the shelf device 9 explained below.

The RAM 93 includes a fingerprint storing unit 931. The fingerprint storing unit 931 stores fingerprint information indicating a fingerprint read by the fingerprint sensor 99.

The memory unit 94 is configured by a nonvolatile memory such as a HDD (Hard Disc Drive) or a flash memory in which stored information is retained even if a power supply is turned off. The memory unit 94 includes a control program unit 941 and a commodity code unit 942. The control program unit 941 stores a control program for controlling the shelf device 9. The commodity code unit 942 stores a commodity code for identifying the commodity G placed on the weight sensor 98 in the shelf device 9.

The control unit 900 is electrically connected to a display unit 97, the weight sensor 98, and the fingerprint sensor 99 via the bus 95 and a controller 96. If an output indicating a weight change changes in the weight sensor 98 (that is, if the weight sensor 98 detects a weight change), the control unit 900 determines that the weight sensor 98 detects the weight change.

The control unit 900 is connected to a communication unit 89 via the bus 95. The communication unit 89 is connected to the cart POS 1 by radio via a communication line L2 and transmits and receives information to and from the cart POS 1.

A hardware configuration of the cart POS 1 is explained. FIG. 5 is a block diagram illustrating the hardware configuration of the cart POS 1. As illustrated in FIG. 5, the cart POS 1 includes a CPU 11, a ROM 12, a RAM 13, and a memory unit 14. The CPU 11 functions as a control entity. The ROM 12 stores various programs. Programs and various data are loaded in the RAM 13. The memory unit 14 stores various programs. The CPU 11, the ROM 12, the RAM 13, and the memory unit 14 are connected to one another via a bus 15. The CPU 11, the ROM 12, and the RAM 13 configure a control unit 100. That is, the CPU 11 operates according to a control program stored in the ROM 12 or the memory unit 14 and loaded in the RAM 13, whereby the control unit 100 executes control processing for the cart POS 1 explained below.

The RAM 13 includes a commodity information unit 131, a fingerprint storing unit 132 (a storing unit), and a commodity code unit 133. The commodity information unit 131 stores commodity information (a commodity name, a price, and the like) of a commodity G to which registration processing is executed. The fingerprint storing unit 132 stores fingerprint information indicating a fingerprint read by the fingerprint sensor 8. The commodity code unit 133 stores a commodity code received from the shelf device 9.

The memory unit 14 is configured by a nonvolatile memory such as a HDD or a flash memory in which stored information is retained even if a power supply is turned off. The memory unit 14 includes a control program unit 141 and a commodity master 142. The control program unit 141 stores a control program for controlling the cart POS 1. The commodity master 142 stores commodity information of the commodities G respectively in association with a plurality of commodity codes of the commodities G sold in the store.

The control unit 100 is electrically connected to the display unit 22, the operation unit 23, the weight sensor 7, and the fingerprint sensor 8 via the bus 15 and a controller 16. The operation unit 23 includes a settlement button 231. The settlement button 231 is operated if the customer ends purchase of the commodity G by the cart POS 1 and shifts to settlement processing. The settlement processing means, for example, payment processing performed by using, based on the commodity information stored in the commodity information unit 131 by the registration processing, display of a total amount relating to the relevant transaction, for example, a credit card. If settlement is performed by a not-illustrated settlement terminal, processing for transmitting settlement information to the settlement terminal may be the settlement processing.

The control unit 100 is connected to a communication unit 24 via the bus 15. The communication unit 24 is connected to the shelf device 9 by radio via the communication line L2 and transmits and receives information to and from the shelf device 9.

A configuration obtained by excluding the weight sensor 7 and the fingerprint sensor 8 from the configuration of the cart POS 1 illustrated in FIG. 5 is equivalent to the configuration of the tablet POS 20. That is, the tablet POS 20 includes the CPU 11, the ROM 12, the RAM 13, the memory unit 14, the bus 15, the controller 16, the display unit 22, the operation unit 23, and the communication unit 24.

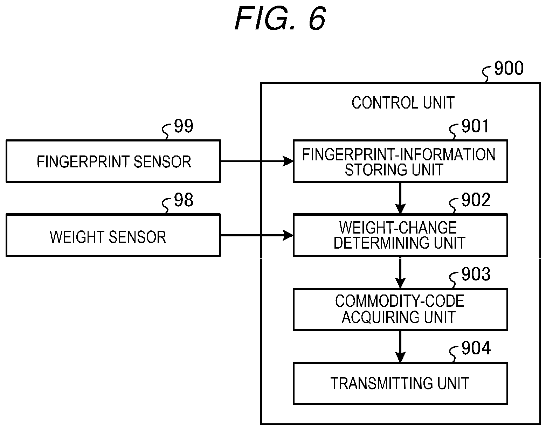

A functional configuration of the shelf device 9 is explained below. FIG. 6 is a functional block diagram illustrating the functional configuration of the shelf device 9. The control unit 900 of the shelf device 9 functions as a fingerprint-information storing unit 901, a weight-change determining unit 902, a commodity-code acquiring unit 903, and a transmitting unit 904 according to the control program stored in the ROM 92 or the control program unit 941 of the memory unit 94.

The fingerprint-information storing unit 901 stores, in the fingerprint storing unit 931, the fingerprint information indicating the fingerprint read by the fingerprint sensor 99.

The weight-change determining unit 902 determines whether the weight sensor 98 detects a weight change. Specifically, the weight-change determining unit 902 monitors an output from the weight sensor 98 and determines whether the weight measured by the weight sensor 98 changes because the commodity G placed on the weight sensor 98 is taken out.

If the weight-change determining unit 902 detects a weight change, the commodity-code acquiring unit 903 reads out a commodity code stored in the commodity code unit 942. The read-out commodity code is a commodity code for identifying the taken-out commodity G.

If the weight sensor 98 detects a weight change, the transmitting unit 904 correlates the commodity code for identifying the commodity G and the fingerprint information of the fingerprint read by the fingerprint sensor 99 and transmits the commodity code and the fingerprint information to the cart POS 1. Specifically, if the weight-change determining unit 902 determines that the weight sensor 98 detects a weight change, the transmitting unit 904 correlates the commodity code acquired by the commodity-code acquiring unit 903 and the fingerprint information stored in the fingerprint storing unit 931 by the fingerprint-information storing unit 901 and transmits the commodity code and the fingerprint information to the cart POS 1.

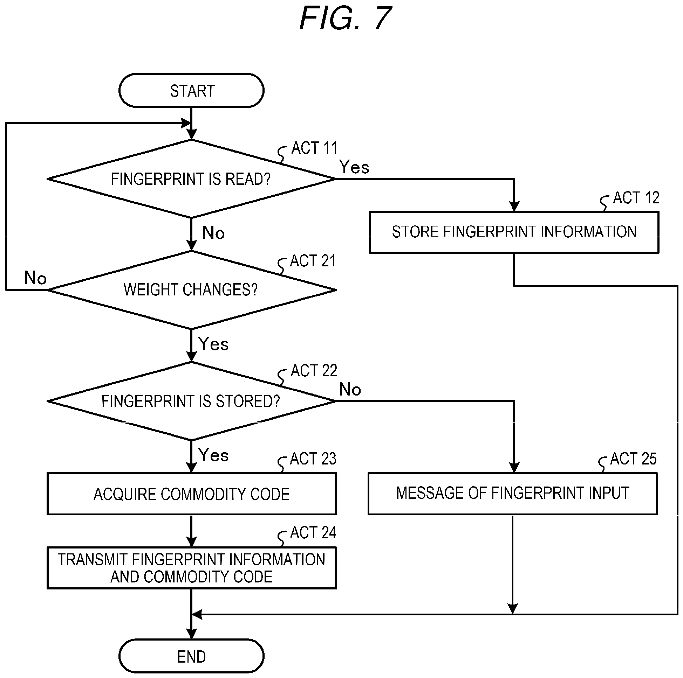

Control of the shelf device 9 is described below with reference to at least one embodiment. FIG. 7 is a flowchart illustrating a flow of control processing of the shelf device 9. As illustrated in FIG. 7, the control unit 900 of the shelf device 9 determines whether the fingerprint sensor 99 reads a fingerprint (ACT 11). If the control unit 900 determines that the fingerprint sensor 99 reads a fingerprint (Yes in ACT 11), the fingerprint-information storing unit 901 stores fingerprint information indicating the read fingerprint in the fingerprint storing unit 931 (ACT 12). The control unit 900 ends the processing and returns to the start.

If the control unit 900 determines that a fingerprint is not read by the fingerprint sensor 99 (No in ACT 11), the weight-change determining unit 902 determines whether the weight sensor 98 detects a weight change (ACT 21). If the weight-change determining unit 902 determines that a weight change is detected (Yes in ACT 21), the control unit 900 determines whether fingerprint information is stored in the fingerprint storing unit 931 (ACT 22). If the control unit 900 determines that fingerprint information is stored in the fingerprint storing unit 931 (Yes in ACT 22), the commodity-code acquiring unit 903 reads out (acquires) a commodity code stored in the commodity code unit 942 (ACT 23). The transmitting unit 904 correlates the fingerprint information stored in the fingerprint storing unit 931 and the read-out commodity code and transmits the fingerprint information and the commodity code to the cart POS 1 (ACT 24). The control unit 900 ends the processing and returns to the start.

On the other hand, if fingerprint information is not stored in the fingerprint storing unit 931 in ACT 22 (No in ACT 22), the control unit 900 displays an instruction to read a fingerprint on the display unit 97 to display, to the customer who takes out the commodity G, a message for causing the customer to read a fingerprint (ACT 25). Then, the control unit 900 ends the processing and returns to the start. If the weight-change determining unit 902 determines that the weight sensor 98 does not detect a weight change (No in ACT 21), the control unit 900 returns to ACT 11.

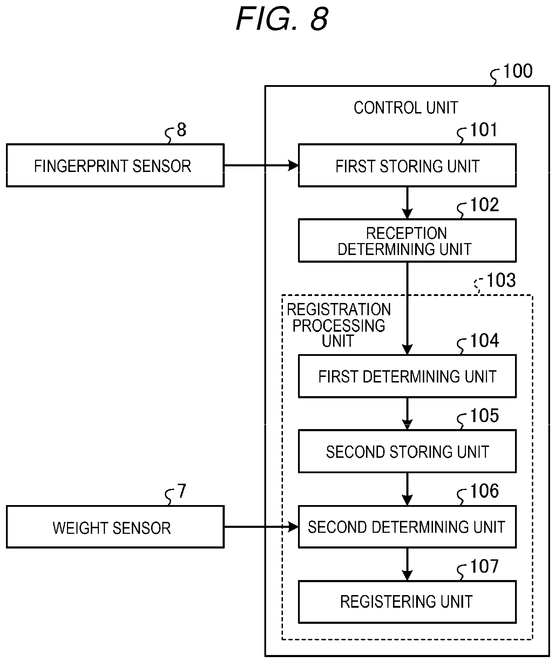

A functional configuration of the cart POS 1 is explained below. FIG. 8 is a functional block diagram illustrating the functional configuration of the cart POS 1. The control unit 100 of the cart POS 1 functions as a first storing unit 101, a reception determining unit 102, and a registration processing unit (registration processor) 103 according to the control program stored in the ROM 12 or the control program unit 141 of the memory unit 14. The registration processing unit 103 functions as a first determining unit 104, a second storing unit 105, a second determining unit 106, and a registering unit (a register) 107.

The first storing unit 101 stores the fingerprint information of the fingerprint read by the fingerprint sensor 8 in the fingerprint storing unit 132.

The reception determining unit 102 determines reception of the commodity code and the fingerprint information transmitted from the shelf device 9.

If the weight sensor 7 detects a change in weight, the registration processing unit 103 executes registration processing based on the commodity code, the reception of which is determined, on condition that the fingerprint information, the reception of which is determined by the reception determining unit 102, and the fingerprint information stored in the fingerprint storing unit 132 coincide.

The first determining unit 104 determines whether the fingerprint information, the reception of which is determined, coincides with the fingerprint information stored in the fingerprint storing unit 132. Specifically, if the reception determining unit 102 determines that fingerprint information is received, the first determining unit 104 compares the fingerprint information and the fingerprint information stored in the fingerprint storing unit 132 and determines whether the fingerprint information coincides with the fingerprint information stored in the fingerprint storing unit 132.

If the first determining unit 104 determines that the fingerprint information, the reception of which is determined, coincides with the fingerprint information stored in the fingerprint storing unit 132, the second storing unit 105 stores the commodity code, the reception of which is determined. Specifically, if the first determining unit 104 determines that the fingerprint information stored in the fingerprint storing unit 132 and the fingerprint information, the reception of which is determined by the reception determining unit 102, coincide, the second storing unit 105 stores the commodity code, the reception of which is determined by the reception determining unit 102, in the commodity code unit 133.

If the weight sensor 7 detects a change in weight, the second determining unit 106 determines whether a commodity code is stored by the second storing unit 105. Specifically, if the weight sensor 7 detects a change in weight, the second determining unit 106 determines whether a commodity code is stored in the commodity code unit 133 by the second storing unit 105.

If the weight sensor 7 detects a change in weight, the registering unit 107 executes registration processing based on the commodity code, the reception of which is determined, on condition that the fingerprint information, the reception of which is determined by the reception determining unit 102, and the fingerprint information stored in the fingerprint storing unit 132 coincide. If the weight sensor 7 detects a change in weight and the second determining unit 106 determines that a commodity code is stored in the commodity code unit 133, the registering unit 107 executes the registration processing based on the commodity code.

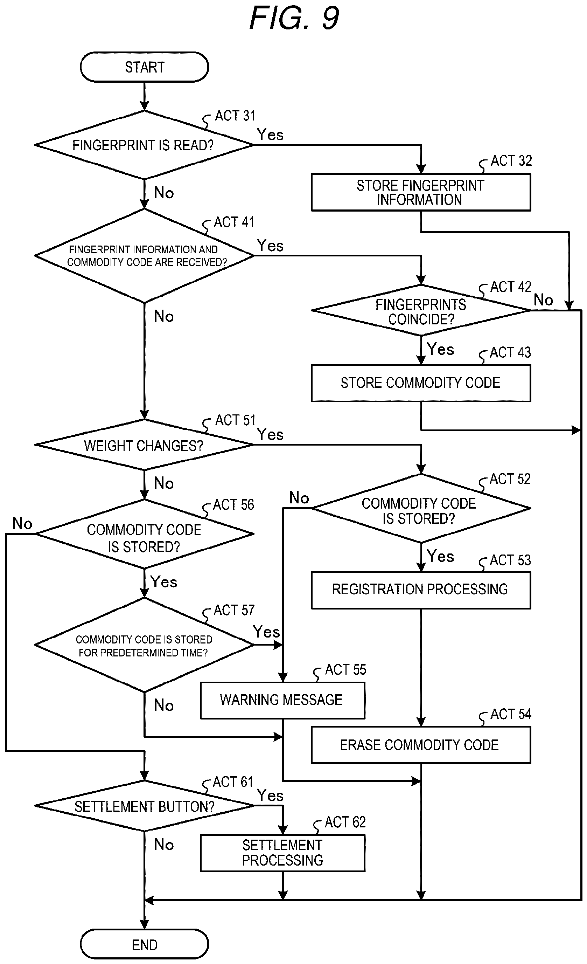

Control of the cart POS 1 is explained below. FIG. 9 is a flowchart illustrating a flow of control processing of the cart POS 1. As illustrated in FIG. 9, the control unit 100 determines whether the fingerprint sensor 8 reads a fingerprint (ACT 31). If the control unit 100 determines that the fingerprint sensor 8 reads a fingerprint (Yes in ACT 31), the first storing unit 101 stores fingerprint information indicating the read fingerprint in the fingerprint storing unit 132 (ACT 32). The control unit 100 ends the processing and returns to the start.

If the control unit 100 determines that a fingerprint is not read by the fingerprint sensor 8 (No in ACT 31), the reception determining unit 102 determines whether the fingerprint information and the commodity code transmitted from the shelf device 9 by the processing in ACT 24 are received (ACT 41). If the reception determining unit 102 determines that the fingerprint information and the commodity code are received from the shelf device 9 (Yes in ACT 41), the control unit 100 temporarily stores the fingerprint information and the commodity code in the RAM 13. The first determining unit 104 compares the received fingerprint information (the fingerprint information temporarily stored in the RAM 13) and the fingerprint information stored in the fingerprint storing unit 132 and determines whether the received fingerprint information and the fingerprint information stored in the fingerprint storing unit 132 coincide (ACT 42). If the first determining unit 104 determines that the received fingerprint information and the fingerprint information stored in the fingerprint storing unit 132 coincide (Yes in ACT 42), the second storing unit 105 regards the received commodity code (the commodity code temporarily stored in the RAM 13) valid and stores the received commodity code in the commodity code unit 133 (ACT 43). The control unit 100 ends the processing and returns to the start. If the first determining unit 104 determines that the received fingerprint information and the fingerprint information stored in the fingerprint storing unit 132 do not coincide (No in ACT 42), the second storing unit 105 regards the received commodity code (the commodity code temporarily stored in the RAM 13) as invalid, does not store the received commodity code in the commodity code unit 133, and ends the processing and returns to the start. At this time, the control unit 100 may cause the tablet POS 20 to display an indication that the commodity code is invalid and a cause of the invalidity or information such as solution means for the invalidity. Consequently, for example, it is possible to appropriately assist an innocent and/or inexperienced customer not accustomed to a method of shopping explained in at least one embodiment.

If the reception determining unit 102 determines that the fingerprint information and the commodity code are not received from the shelf device 9 (No in ACT 41), the control unit 100 determines whether the weight sensor 7 detects a change in weight (ACT 51). In this case, the control unit 100 determines whether the weight sensor 7 changes in a direction in which weight increases. If the control unit 100 determines that the weight sensor 7 changes in the direction in which weight increases (Yes in ACT 51), the second determining unit 106 determines whether a commodity code is stored in the commodity code unit 133 (ACT 52). A commodity code being stored in the commodity code unit 133 means that the first determining unit determines in ACT 42 that the received fingerprint information and the fingerprint information stored in the fingerprint storing unit 132 coincide. If the second determining unit 106 determines that a commodity code is stored in the commodity code unit 133 (Yes in ACT 52), the registering unit 107 executes the registration processing for the relevant commodity G based on the commodity code stored in the commodity code unit 133 (ACT 53). That is, the registration processing in ACT 53 is executed only if the fingerprint information stored in ACT 32 and the fingerprint information received from the shelf device 9 in ACT 41 coincide. Accordingly, only commodity information of the commodity G, fingerprint information of which coincides, is stored in the commodity information unit 131. This indicates that the customer taking out the commodity G from the shelf device 9 stores the commodity G in the cart POS 1 which the customer is moving. This also indicates that commodity information of the commodity G is stored in the commodity information unit 131 in association with fingerprint information of the customer who is moving the cart POS 1. The control unit 100 erases the commodity code stored in the commodity code unit 133 (ACT 54). The control unit 100 ends the processing and returns to the start. The determination in ACT 42, the processing in ACT 43, the determination in ACT 52, and the processing in ACT 53 correspond to the registration processing unit 103.

In this way, the control unit 100 determines the coincidence of the fingerprint information of the read fingerprint and the fingerprint information received from the shelf device 9 to correlate the commodity G with the fingerprint information and execute the registration processing for the commodity G even if a medium for identifying the customer is absent.

On the other hand, the second determining unit 106 determines that a commodity code is not stored in the commodity code unit 133 (No in ACT 52), the control unit 100 displays a warning message on the display unit 22. In the case of Yes in ACT 51 and No in ACT 52, the customer is supposed to have carried out the commodity G from somewhere and stored the commodity G in the cart POS 1, although the customer did not take out the commodity G from the shelf T. Therefore, the control unit 100 displays a warning message against such an action of the customer (ACT 55). In this way, it is possible to warn against a wrongful (dishonest) act of the customer.

If determining in ACT 51 that the weight sensor 7 does not change in the direction in which weight increases (if determining that the weight sensor 7 does not detect a weight change or the weight sensor 7 changes in a direction in which weight decreases) (No in ACT 51), the control unit 100 determines whether a commodity code is stored in the commodity code unit 133 (ACT 56). If determining that a commodity code is stored in the commodity code unit 133 (Yes in ACT 56), the control unit 100 determines whether a predetermined time elapses after the commodity code is stored in the commodity code unit 133 (ACT 57). If determining that the predetermined time elapses after the commodity code is stored in the commodity code unit 133 (Yes in ACT 57), the control unit 100 displays a warning message on the display unit 22 (ACT 55). In the case of Yes in ACT 57, the customer is supposed to have taken out the commodity G from the shelf T but have not stored the commodity G in the cart POS 1 even if the predetermined time elapsed. Therefore, the control unit 100 displays a warning message against such a dishonest act of the customer. In this way, it is possible to warn against a wrongful act of the customer. As a factor of the change of the weight sensor 7 in the direction in which weight decreases, it is likely that a commodity already put in the basket K is taken out by the customer. In such a case, for example, a commodity code of the taken-out commodity may be stored for the predetermined time in parallel to the processing in ACT 56 to ACT 57 or before or after the Acts. If weight does not return to the original weight, in other words, if the customer does not return the taken-out commodity to the basket K even if the predetermined time elapses, in ACT 55, the control unit 100 may display the warning message. In this case, since the taken-out commodity is a commodity already subjected to the registration processing in ACT 53 in principle, the warning message may be announcement such as "Do you wish to cancel the registration processing for the taken-out commodity?" Consequently, if the customer desires to stop the purchase of the taken-out commodity and return the commodity to the original commodity shelf, the announcement is appropriate.

If determining that a commodity code is not stored in the commodity code unit 133 (No in ACT 56), the control unit 100 determines whether the settlement button 231 is operated (ACT 61). If determining that the settlement button 231 is operated (Yes in ACT 61), the control unit 100 executes settlement processing based on the commodity information stored in the commodity information unit 131 (ACT 62). That is, the control unit 100 executes the settlement processing based on the commodity information of the commodity associated with the fingerprint information of the customer who is moving the cart POS 1. The control unit 100 ends the processing and returns to the start. If determining that the settlement button 231 is not operated (No in ACT 61), the control unit 100 ends the processing and returns to the start.

Such a system ST in at least one embodiment is the system ST including the shelf device 9 provided for each of the commodities G in the shelf T on which the commodities G are displayed and the cart POS 1 capable of moving and capable of storing the commodities G displayed on the shelf T. The shelf devices 9 includes the weight sensor 98 that detects a weight change at the time when the commodity G is taken out from the shelf T, the fingerprint sensor 99 that is provided to correspond to the weight sensor 98 and reads a fingerprint of a person, and the transmitting unit 904 that, if the weight sensor 98 detects a weight change, correlates a commodity code for identifying the commodity G and fingerprint information of the fingerprint read by the fingerprint sensor 99 and transmits the commodity code and the fingerprint information. The cart POS 1 includes the fingerprint sensor 8 that reads a fingerprint of a person, the first storing unit 101 that stores fingerprint information of the fingerprint read by the fingerprint sensor 8 in the fingerprint storing unit 132, the reception determining unit 102 that determines reception of the commodity code and the fingerprint information transmitted from the shelf device 9, the weight sensor 7 that detects a change in weight at the time when the commodity G is stored in the cart POS 1, and the registration processing unit 103 that, if the weight sensor 7 detects a change in weight, executes the registration processing based on the commodity code, the reception of which is determined, on condition that the fingerprint information, the reception of which is determined by the reception determining unit 102, and the fingerprint information stored in the fingerprint storing unit 132 coincide.

In such a system ST in at least one embodiment, the shelf device 9 transmits the fingerprint information and the commodity code and the cart POS 1 executes the registration processing for the commodity G if the fingerprint information of the read fingerprint and the fingerprint information received from the shelf device 9 coincide. Accordingly, it is possible to perform the registration processing for the commodity G in association with the fingerprint information even if, for example, a medium for identifying an individual is absent.

The shelf device 9 in the embodiment is the shelf device 9 provided for each of the commodities G in the shelf T on which the commodities G are displayed. The shelf device 9 includes the weight sensor 98 that detects a weight change at the time when the commodity G is taken out from the shelf T, the fingerprint sensor 99 that is provided to correspond to the weight sensor 98 and reads a fingerprint of a person, and the transmitting unit 904 that, if the weight sensor 98 detects a weight change, correlates a commodity code for identifying the commodity G and fingerprint information of the fingerprint read by the fingerprint sensor 99 and transmits the commodity code and the fingerprint information.

Such a shelf device 9 in at least one embodiment correlates a commodity code of the taken-out commodity G and fingerprint information of a customer who takes out the commodity G and transmits the commodity code and the fingerprint information to the cart POS 1. Accordingly, it is possible to contribute to coincidence of the fingerprint information in the cart POS 1 in which the fingerprint information is stored in advance and storage of commodity information corresponding to the fingerprint information.

The cart POS 1 in at least one embodiment is the cart POS 1 capable of moving and capable of storing the commodities G displayed on the shelf T, the cart POS 1 receiving a commodity code and fingerprint information from the shelf device 9 provided for each of the commodities G in the shelf T on which the commodities G are displayed, the shelf device 9 including the weight sensor 98 that detects a weight change at the time when the commodity G is taken out from the shelf T, the fingerprint sensor 99 that is provided to correspond to the weight sensor 98 and reads a fingerprint for identifying a person, and the transmitting unit 904 that, if the weight sensor 98 detects a weight change, correlates a commodity code for identifying the commodity G and fingerprint information of the fingerprint read by the fingerprint sensor 99 and transmits the commodity code and the fingerprint information. The cart POS 1 includes the fingerprint sensor 8 that reads a fingerprint of a person, the first storing unit 101 that stores fingerprint information of the fingerprint read by the fingerprint sensor 8 in the fingerprint storing unit 132, the reception determining unit 102 that determines reception of the commodity code and the fingerprint information transmitted from the shelf device 9, the weight sensor 7 that detects a change in weight at the time when the commodity G is stored in the cart POS 1, and the registering unit 103 that, if the weight sensor 7 detects a change in weight, executes the registration processing based on the commodity code, the reception of which is determined, on condition that the fingerprint information, the reception of which is determined by the reception determining unit 102, and the fingerprint information stored in the fingerprint storing unit 132 coincide.

Such a cart POS 1 in at least one embodiment executes the registration processing for the commodity G if the fingerprint information of the read fingerprint and the fingerprint information received from the shelf device 9 coincide. Accordingly, it is possible to perform the registration processing for the commodity G in association with the fingerprint information even if, for example, a medium for identifying an individual is absent.

At least one embodiment of the disclosure is explained above. However, the at least one embodiment is presented as an example and is not intended to limit the scope of the disclosure. The at least one embodiment can be implemented in other various forms. Various omissions, substitutions, and changes can be made without departing from the scope of the disclosure. This at least one embodiment is included in the scope and the gist of the disclosure and included in the disclosure described in claims and the scope of equivalents of the inventions.

For example, in the at least one embodiment, the fingerprint information and the pupil information are used as the bioinformatics data of the person. However, not only this, but in some embodiments, the bioinformatics data may alternatively or in addition include other information for individually identifying a person such as information relating to a vein of a hand of the person. In at least one embodiment, the weight sensor 98 is used as means for detecting that a commodity is taken out from the shelf device 9. However, not only this, but a method of providing a camera in a shelf device, recognizing an image of a taken commodity (and a commodity code), and identifying the commodity or a method of replacing the weight sensor 98 with a contact sensor to thereby discern that a commodity is taken may be adopted. In this case, if the shelf device 9 and the commodity G placed on the shelf device 9 are correlated in advance, it is possible to determine a commodity code. In the cart POS 1, the weight sensor 7 is used as means for detecting that the commodity G is stored in the basket placing section 3. However, not only this, but various methods such as a method of providing a camera in the handle 2, recognizing an image of a stored commodity (and a commodity code), and determining the commodity can be adopted.

The program executed by the cart POS 1 in at least one embodiment is provided while being recorded in a computer-readable recording medium such as a CD-ROM, a flexible disk (FD), a CD-R, or a DVD (Digital Versatile Disk) as a file of an installable format or an executable format.

The program executed by the cart POS 1 in at least one embodiment may be stored on a computer connected to a network such as the Internet and provided by being downloaded through the network. The program executed by the cart POS 1 in the embodiment may be provided or distributed through the network such as the Internet.

The program executed by the cart POS 1 in at least one embodiment may be incorporated in a ROM or the like in advance and provided.

## Claims

1. A system comprising:
a shelf device provided for each of commodities in a shelf on which the commodities are displayed; and
a cart point of sale (POS) configured to store the commodities displayed on the shelf, the POS being movable,
the shelf device including:
a first sensor configured to detect whether or not a commodity is taken out from the shelf;
a first biological sensor provided corresponding to the first sensor, and configured to read bioinformatics data for identifying a person; and
a transmitter configured to correlate and transmit a commodity code for identifying the commodity when the first sensor detects that the commodity is taken out and the bioinformatics data of the person read by the first biological sensor,
the cart POS including:
a storage section configured to store commodities;
a second biological sensor configured to read the bioinformatics data of the person;
a first memory configured to store, in a memory, the bioinformatics data of the person read by the second biological sensor;
a controller configured to determine reception of the commodity code and the bioinformatics data transmitted from the shelf device; and
a second sensor configured to detect that a commodity is stored in the storage section,
the controller being further configured to, when the second sensor detects that the commodity is stored, execute registration processing based on the commodity code, the reception of which is determined, on condition that the bioinformatics data, the reception of which is determined by the controller, and the bioinformatics data stored in the memory coincide.

2. The system according to claim 1, wherein the controller is configured to:
determine whether the bioinformatics data, the reception of which is determined, and the bioinformatics data stored in the memory coincide,
wherein the controller further includes
a second memory configured to store the received commodity code in response to a determination that the bioinformatics data, the reception of which is determined, and the bioinformatics data stored in the memory coincide, and
wherein the controller is further configured to:
when the second sensor detects that the commodity is stored, determine whether the commodity code is stored by the second memory; and
in response to a determination that the commodity code is stored, execute the registration processing based on the stored commodity code.

3. The system according to claim 1 or 2, wherein the first biological sensor and the second biological sensor include fingerprint sensors configured to read a fingerprint of a person.

4. The system according to claim 1 or 2, wherein the shelf device includes a plurality of shelf plates in a height direction, a pupil sensor configured to read the bioinformatics data from a pupil of a person, the pupil sensor being provided on the shelf plate on an upper side as the first biological sensor, and a fingerprint sensor configured to read a fingerprint of a person, the fingerprint sensor being provided on the shelf plate on a lower side as the first biological sensor.

5. The system according to any one of claims 1 to 4, wherein the second sensor includes one of a weight sensor and a contact sensor.

6. The system according to any one of claims 1 to 5, wherein the cart POS includes a tablet.

7. A shelf device to be used in the system according to any one of claims 1 to 6.

8. A cart point of sale (POS) to be used in the system according to any one of claims 1 to 6.
